Europäisches Patentamt

European Patent Office

Office européen des brevets

(19)

(11) Veröffentlichungsnummer: **0 260 508**
**B1**

(12) **EUROPÄISCHE PATENTSCHRIFT**

(45) Veröffentlichungstag der Patentschrift: **09.01.91**

(51) Int. Cl.[5]: **B 65 G 45/00, C 10 M 133/04, C 11 D 1/62**

(21) Anmeldenummer: **87112635.5**

(22) Anmeldetag: **29.08.87**

(54) **Verfahren zum Schmieren und Reinigen von Flaschentransportbändern in der Getränkeindustrie.**

(30) Priorität: **19.09.86 DE 3631953**

(43) Veröffentlichungstag der Anmeldung:
**23.03.88 Patentblatt 88/12**

(45) Bekanntmachung des Hinweises auf die
Patenterteilung:
**09.01.91 Patentblatt 91/02**

(84) Benannte Vertragsstaaten:
**AT BE CH DE ES FR GB GR IT LI LU NL SE**

(56) Entgegenhaltungen:
**DE-A-1 756 056**
**DE-A-2 241 169**
**DE-A-3 129 132**
**DE-B-1 532 533**

(73) Patentinhaber: **AKZO N.V.**
**Velperweg 76**
**NL-6824 BM Arnhem (NL)**

(72) Erfinder: **Jansen, Georg, Dr.**
**Am Mortes 5**
**D-5166 Kreuzau (DE)**

(74) Vertreter: **Sieders, René**
**AKZO N.V. Patent Department (Dept. CO) P.O.**
**Box 9300**
**NL-6800 SB Arnhem (NL)**

Courier Press, Leamington Spa, England.

### Beschreibung

Die Erfindung betrifft ein Verfahren zum Schmieren und Reinigen von Flaschentransportbändern, insbesondere von Plattenbändern, Scharnierbandketten u.dgl. wie sie z.B. zum Transport von Getränkeflaschen vom Auspacker zur Waschmaschine, zum Füller, zur Etikettiermaschine und zum Einpacker dienen. Ein Verfahren diesser Art, sowie ein Verfahren gemäß dem Oberbegriff des Anspruchs 1, in bekannt.

In der Getränkeindustrie, wie z.B. in den Brauereien, wird das Reinigen von Flaschen, das Füllen derselben und das Etikettieren usw. vorwiegend automatisch durchgeführt. So leisten halbautomatische Anlagen den Transport von etwa 2000 Flaschen und mehr pro Stunde; vollautomatische Anlagen können bis etwa 80 000 Flaschen und mehr pro Stunde bewältigen.

Der Transport der Flaschen in den Abfüllbetrieben findet auf Bändern statt, den sogenannten "Plattenbändern", die meistens aus Edelstahl bestehen. Diese kettenförmigen Bänder werden mit einem Kettengleit mittel, auch "Bandschmiermittel" genannt, geschmiert. Auch müssen diese Trasportbander, meistens in mebr oder weniger regelmäßigen Abständen, gereinigt werden.

Als Kettengleitmittel werden in Brauereien vorzugsweise Kalischmierseifen eingesetzt, denen z.B. synthetische nichtionische oder ionische Tenside beigemengt sein können.

Nachteilig bei derartigen Kettengleitmitteln ist, daß die Kaliseifen empfindlich gegenüber Wasserhärte sind. Deshalb werden meistens auch Sequestriermittel wie Äthylendiaminessigsäure zugefügt, die die Härte teilweise maskieren.

Ist Wasser hart, kommt es zu den bekannten Problemen, die hartes Wasser mit sich bringt, d.h. der Wirkungsgrad des Kettengleitmittels wird herabgesetzt, außerdem können z.B. die ausgefallenen Calciumsalze zu Problemen beim Schmieren führen, weil sie nicht, wie es die Alkaliseifen tun, den Reibungswiderstand zwischen Flasche und Kette herabsetzen. Auch besteht die Gefahr, daß die Kohlensäure im Wasser und das $CO_2$ aus der Luft bewirken, daß die Fettsäuren ausfallen, was ebenfalls zu Schwierigkeiten bei der Schmierung führen kann.

Ein weiterer Nachteil bei der Verwendung von Kalischmierseifen als Kettengleitmittel ist der, daß zwar ausgefallene Kalkseifen und Fettsäuren biologisch gut abbaubar sind, andererseits aber einen guten Nährboden für Bakterien darstellen. So kommt es, daß sich unter den Ketten und zwischen den Kettengliedern ein Schleim bildet, der sehr schnell infolge des Abbaus durch Bakterien zu unangenehmer Geruchsbildung führt. Der gebildete Schleim muß deshalb häufig, z.B. unter Verwendung einer Hochdruckspritze, mit Wasser weggespritzt werden. Trotzdem ist es nicht möglich, die Geruchsbildung völlig zu unterbinden; darüber hinaus entfaltet der weggespülte Schleim natürlich den üblen Geruch auch an anderen Stellen.

Es ist zwar schon bekannt, an Stelle von Kalischmierseifen synthetische Kettengleitmittel einzusetzen, insbesondere solche auf Aminbasis, die nicht die Nachteile von Kalifettseifen aufweisen. Diese kationischen Kettengleitmittel sind allerdings anionenempfindlich, was sich insbesondere darin auswirkt, daß die Düsen, durch welche das Kettengleitmittel auf die Transportbänder dosiert werden mit der Zeit verstopfen. So reagieren derartige Kettengleitmittel insbesondere mit Anionen wie Carbonaten und Sulfaten, die im verwendeten Wasser reichlich vorhanden sind. Die gleichen Umsetzungen können auch auf den Bändern stattfinden, so daß die schwerlöslichen Produkte, welche aus der Reaktion des Bandschmiermittels mit Anionen entstanden sind, die Schmier- bzw. Gleitwirkung herabsetzen.

Es besteht somit noch ein Bedürfnis, die Bandschmierung und die Reinigung der Transportbänder in der Getränkeindustrie, insbesondere in Brauereien zu verbessern.

Aufgabe der Erfindung ist es deshalb, die Schmierung und Reinigung derartiger Bänder zu ermöglichen, ohne daß es zu hartnäckigen Ablagerungen und Geruchsbelästigungen kommt, wie das bei der Verwendung von Kaliseifen als Bandschmiermittel der Fall ist.

Aufgabe der Erfindung ist es, gleichzeitig auch die Reinigung der Dosiereinrichtungen zu ermöglichen.

Aufgabe der Erfindung ist es ferner, einen störungsfreien Transport der Flaschen mittels der Transportbänder zu ermöglichen, ohne daß es zu Betriebsunterbrechungen kommt wegen mangelnder Bandschmierung oder Schwierigkeiten bei der Reinigung der Bänder und Dosiervorrichtungen für das Bandschmiermittel.

Diese Aufgabe wird gelöst durch ein Verfahren zum Schmiern von kettenförmigen Flaschentransportbändern in Getränkeabfüllbetrieben, insbesondere in Brauereien sowie Reinigen der Bänder mittels eines flüssigen Reinigungsmittels, das dadurch gekennzeichnet ist, daß man die kettenförmigen Flaschentransportbänder mit Bandschmiermitteln auf der Basis neutralisierter primärer Fettamine schmiert und die Flaschentransportbänder mit kationischen Reinigungsmitteln oder organischen Säuren reinigt.

Die Transportbänder werden vorzugsweise kontinuierlich geschmiert. Die Reinigung der Transporthbänder findet zweckmäßiger weise diskontinuierlich statt.

In einer besonders vorteilhaften Ausführungsform des erfindungsgemäßen Verfahrens werden die Reinigungsmittel auf die Transportbänder mit Hilfe der Bandschmiermitteldosiervorrichtungen aufgebracht.

Sehr geeignet sind Bandschmiermittel auf der Basis von 5 bis 20 % eines mit Essigsäure auf pH 6 bis 8 neutralisierten Gemisches aus primären Fettaminen, die vorzugsweise 12 bis 18 Kohlenstoffatome aufweisen und einen ungesättigten Anteil von mehr als 10 % enthalten, 1 bis 5 % äthoxylierter Fettalkohle, äthoxylierter Fettamine oder äthoxyliertem Nonylphenol mit einem Äthoxylierungsgrad von 5 bis 15, 1 bis 5 % Triäthanolamin, 5 bis 12 % Isopropanol, Rest Wasser.

Als kationische Reinigungsmittel werden Reinigungsmittel auf der Basis von quaternären Ammoniumverbindungen bevorzugt.

In einer besonders vorteilhaften Ausführungsform des erfindungsgemäßen Verfahrens wird ein Reinigungsmittel auf der Basis von quaternären Ammoniumverbindungen eingesetzt, das 30 bis 45 Gew.-% quaternäre Ammoniumverbindungen, 1 bis 5 % äthoxylierte Fettalkohole, äthoxylierte Fettamine, äthoxyliertes Nonylphenyol mit einem Äthoxylierungsgrad von 5 bis 10, 0 bis 5 Gew.-% Isopropanol und Rest Wasser enthält.

Als quaternäre Ammoniumverbindungen eignen sich besonders Alkyltrimethylammonium- und Dialkyldimethylammonium- und Alkyldimethylbenzylammoniumchloride mit Alkylresten, die 12 bis 18 Kohlenstoffatome aufweisen.

Als primäre Fettamine können Alkylamine mit 12 bis 20 Kohlenstoffatomen eingesetzt werden. Vorzugsweise setzt man jedoch Gemische aus gradkettigem Fettamin mit 12 bis 18 Kohlenstofatomen ein, insbesondere solche mit einem hohen Anteil ungesättigter Fettamine. Besonders geeignet als quaternäre Ammoniumverbindungen sind im Rahmen der Erfindung Alkyldimethylbenzylammonium-, Alkyltrimethylammonium- und Dialkyldimethylammoniumchloride, wobei die Alkylreste vorzugsweise 12 bis 18 Kohlenstoffatome aufweisen. Alkyldimethylbenzylammoniumchloride mit 12 bis 14 Kohlenstoffatomen sind dabei besonders geeignet.

Besonders geeignet für das Bandschmiermittel sind Gemische von primären Fettaminen mit einem ungesättigten Anteil von mindestens 50 Gew.-%.

Noch besser als die oben genannten kationischen Reinigungsmittel verhalten sich organische Säuren. Sie sollten gut lösliche Aminsalze bilden. Ganz besonders eignen sich Gluconsäure und Essigsäure. Vorteilhafterweise werden den Säuren in einer Konzentration von wenigstens 0,5 Gew.-%, insbesondere von 0,5 bis 5 Gew.-% eingesetzt.

Unter Flaschentransportbändern im Sinne der Erfindung sind alle Bänder zu verstehen, wie sie üblicherweise zum Transport von Flaschen in der Getränkeindustrié verwendet werden. Dazu sind die Bänder zu zählen, die zum eigentlichen Transport der Flaschen dienen als auch die Teile der Bänder, die sogenannte Flaschenbahnhöfe bilden, auf welchen die Flaschen während des Transports zusammengeführt werden bzw. von denen sie auch wieder abgeführt werden. Das Verfahren eignet sich sowohl für Bänder, die mit oder ohne Steigung transportieren.

Derartige Flaschentransportbänder werden z.B. in H & K Journal 103, Oktober 1983, Holstein und Kappert GmbH, Postfach 308, D-4600 Dortmund 1 oder in dem prospekt pD 267 "H & K-Flaschentransportanlagen" der Firma Holstein und Kappert, Dortmund beschrieben.

Zur Durchführung des erfindungsgemäßen Verfahrens kann man in folgender Weise vorgehen. Man stellt eine wäßrige Lösung des Kettengleitmittels bzw. Bandschmiermittels her und dosiert über eine übliche Dosierstation unter Verwendung üblicher Düsen auf das kettenförmige Band in einer Menge, die ausreichend ist, um auf dem Band eine genügende Schmierwirkung zu entfalten. Im allgemeinen wird die Viskosität der Mittel auf etwa 20 bis 80 mpa.s eingestellt.

Zur Schmierung sind erfindungsgemäß Konzentrationen zwischen 0,2 und 1,0 Gew.-% des Bandschmiermittels ausreichend. Die verdünnten Lösungen können kontinuierlich oder mittels Intervalldosierung (z.B. 20 sec. Spritzen, 10 sec. Auszeit) auf die Bänder gesprüht werden. Ein für Schmiermittel auf Seifenbasis konzipiertes Dosiersystem kann ohne Änderung auch erfindungsgemäß betrieben werden.

Zum Reinigen kann man eine zweite Station benutzen, mit der man in regelmäßigen oder unregelmäßigen Abständen die Transportbänder, insbesondere die Schmierstellen, besprüht.

Besonders vorteilhaft ist es, wenn man das Reinigungsmittel durch die Dosiervorrichtungen schickt, mit welchem während des Betriebes das Bandschmiermittel aufgebracht wird. Dies kann z.B. nach Ablauf einer oder mehreren Schichten geschehen. Dazu wird die Bandschmieranlage abgestellt und das Reinigungsmittel zwischen Vorratstank für das Bandschmiermittel und die Bandschmierdosiermittelvorrichtungen eingeleitet. Auf diese Weise werden Dosierpumpen, Rohrleitungen und Verteilungsdüsen gleichzeitig mitgereinigt.

Es war besonders überraschend, daß es mit dem erfindungsgemäßen Verfahren möglich ist, einen ungestörten kontinuierlichen Flaschentransportbetrieb in der Getränkeindustrie zu gewährleisten. Es ist nicht erforderlich, während einer Schicht Reinigungen einzuschalten. Es reicht völlig aus, wenn man nach ein oder mehreren Schichten, z.B. täglich oder wöchentlich, eine Reinigung durchführt. Auf diese Weise wird vermieden, daß sich an den geschmierten Stellen der Flaschentransportbänder Niederschläge bilden, welche die Schmierungswirkung der Schmiermittel herabsetzen. Es kommt nicht zu unerwünschten Ablagerungen und Verstöpfungen an den Verteilungsdüsen, da es völlig ausreicht, die Reinigungen nach verhältnismäßig langen Zwischenräumen durchzuführen.

Die von den Bändern abtropfenden Schmiermittel und Reinigungsmittel sind keine Nährboden für Bakterien, was für die hygienischen Verhältnisse im Abfüll-, Etikettier- und Waschbetrieb von großer Bedeutung ist. Reinigungsmittel und Bandschmiermittel können ohne weiteres mittels Wasser weggespritzt werden und bieten auch bei der Aufarbeitung des Abwassers keine Probleme, insbesondere stellen sie keine Geruchsbelästigung dar.

Bei Verwendung von Fettaminen mit einem hohen ungesättigten Anteil lassen sich besonders gut auch längerkettige Fettamine verwenden deren Schmiervermögen höher ist als das von kürzerkettigen.

Die Erfindung wird durch folgende Beispiele näher erläutert:

Beispiel 1

Ein Bandschmiermittel der folgenden Zusammensetzung 4 % Cocosamin des., 4.5 % Oleylamindest., 3.5 % Essigsäure 60%ig, 2 % Sojaamin.15 E0, 2 % Triethanolamin, 6 % Isopropanol und 78 % Wasser, wird in einer Konz. von 0.55 über eine Dosierstation in den Wasserstrom (Wasser mit 15°dH) des Zentralschmiersystems eingespeist und über Düsen auf die Transportbänder kontinuierlich gesprüht. Im Vergleich zu einem seifenbasierten Produkt ergibt sich eine gleichgute Schmierwirkung, ohne daß sich jedoch wie bei Seifenprodukten Schaum auf den Bändern und dem Fußboden bildet. Ablagerungen von Schmiermittelresten zwischen den einzelnen Bändern und den Kettengliedern bleibt äußerst gering; ein biologischer Befall und eine daraus resultierende Geruchsbildung wird auch nach mehrwöchigem Betrieb nicht beobachtet. Die Bänder bleiben blank und glatt. Eine separate Reinigung mit einem Hochdruckspritzgerät ist nicht erforderlich. Nach Betriebsende, in den Abendstunden, wird das Dosiersystem auf Reinigung umgestellt. Anstelle des Bandschmiermittels wird in das Rohrleitungssystem ein Reinigungsmittel der Zusammensetzung 82 % Benzalkonium-chlorid+ 50%ig, 3 % Nonylphenol.9 E0*, 5 %Isopropanol, 10 % Wasser eingespeist, so daß eine Konz. von ca. 2 % resultiert. Das Reinigungsmittel wird ca. 15 min. gespritzt und die Rohrleitungen werden über Nacht gefüllt stehen gelassen. Eventuell gebildete Ablagerungen in den Rohren lösen sich auf. Die austretende Reinigungslösung säubert die Bandstrecken. Am nächsten Betriebstag wird das Dosiersystem wieder auf das Banschmiermittl umgestellt. Die Umstellung kann durch eine automatische Zeitschaltung erfolgen.

Beispiel 2

Aus einer Gasflasche wurde $CO_2$ in eine wäßrige Lösung des Bandschmiermittels gemäß Beispiel 1 geleitet. Dabei entstanden weiße Niederschläge, die sich in dem Reinigungsmittel gemäß Beispiel 1 kaum lösten, wohl aber — und zwar sogar sehr schnell in einer 2%igen Gluconsäure oder Essigsäure.

**Patentansprüche**

1. Verfahren zum Schmieren von kettenförmigen Flaschentransportbändern in Getränkeabfüllbetrieben, insbesondere in Brauereien, sowie zum Reinigen der Bänder mittels eines flüssigen Reinigungsmittels, dadurch gekennzeichnet, daß man die kettenförmigen Flaschentransportbänder mit Bandschmiermitteln auf der Basis neutrali

+) (= Kokosfettdimethylbenzylammoniumchlorid)
*) Ozyäthylierungsgrad sierter primärer Fettamine schmiert und die Flaschentransportbänder mit kationischen Reinigungsmitteln oder organischen Säuren reinigt.

2. Verfahren nach Anspruch 1, dadurch gekennzeichnet, daß man die Transportbänder kontinuierlich schmiert.

3. Verfahren nach einem der Ansprüche 1 bis 2, dadurch gekennzeichnet, daß man die Transportbänder diskontinuierlich reinigt.

4. Verfahren nach einem oder mehreren der Ansprüche 1 bis 3, dadurch gekennzeichnet, daß man die Reinigungsmittel auf die Transportbänder mit Hilfe der Bandschmiermitteldosiervorrichtungen aufbringt.

5. Verfahren nach einem oder mehreren der Ansprüche 1 bis 4, dadurch gekennzeichnet, daß man ein Bandschmiermittel auf der Basis von 5 bis 20 % eines mit Essigsäure auf pH 6-8 neutralisierten Gemisches aus primären Fettaminen, die vorzugsweise 12 bis 18 Kohlenstoffatome aufweisen und einen ungesättigten Anteil von mehr als 10 % enthalten, 1 bis 5 % äthozylierter Fettalkohole und/oder äthoxylierter Fettamine und/oder äthoxylierten Nonylphenol mit einem Äthoxylierungsgrad von 5 bis 15, 1 bis 5 % Triäthanolamin, 5 bis 12 % Isopropanol, Rest Wasser verwendet.

6. Verfahren nach einem oder mehreren der Ansprüche 1 bis 5, dadurch gekennzeichnet, daß man als kationisches Reinigungsmittel quarternäre Ammoniumverbindungen verwendet.

7. Verfahren nach Anspruch 6, dadurch gekennzeichnet, daß man als Reinigungsmittel ein Mittel verwendet, das 30 bis 45 Gew.-% quaternäre Ammoniumverbindungen, 1 bis 5 Gew.-% äthoxylierte Fettalkohole und/oder äthoxylierte Fettamine, und/oder äthoxylierte Fettamine, und/oder äthoxyliertes Nonylphenyol mit einem Äthoxylierungsgrad von 5 bis 10, 0 bis 5 Gew.-% Isopropanol und Rest Wasser enthält.

8. Verfahren nach einem der Ansprüche 6 bis 7, dadurch gekennzeichnet, daß man als quaternäre Ammoniumverbindung Alkyltrimethylammonium-, Dialkyldimethylammonium- und Alkyldimethylbenzylammoniumchloride mit Alkylresten, die 12 bis 18 Kohlenstoffatome aufweisen, verwendet.

9. Verfahren nach Anspruch 8, dadurch gekennzeichnet, daß man ein Alkyldimethylbenzylammoniumchlorid mit einer Alkylgruppe, die 12 bis 14 Kohlenstoffatome aufweist, verwendet.

10. Verfahren nach einem oder mehreren der Ansprüche 1 bis 9, dadurch gekennzeichnet, daß man Fettamingemische mit einem ungesättigten Anteil von mindestens 50 Gewichtsprozent verwendet.

11. Verfahren nach einem oder mehreren der Ansprüche 1 bis 5, dadurch gekennzeichnet, daß man eine organische Säure verwendet, die gut lösliche Aminsalze bildet, insbesondere Gluconsäure und/oder Essigsäure.

12. Verfahren nach einem oder mehreren der Ansprüche 1 bis 5 oder 11, dadurch gekennzeichnet, daß man die organische Säure in einer Konzentration von wenigstens 0,5 Gew.-%, insbesondere von 0,5 bis 5 Gew.-% einsetzt.

13. Verfahren nach einem oder mehreren der Ansprüche 1 bis 12, dadurch gekennzeichnet, daß man wäßrige Bandschmiermittel einer Viskosität von 20 bis 80 mpa.s verwendet.

**Revendications**

1. Procédé de lubrification de convoyeurs pour bouteilles de type à chaînes utilisé dans les industries de mise en bouteilles, en particulier dans les brasseries, ainsi que de nettoyage des convoyeurs au moyen d'un agent liquide, caractérisé par le fait qu'on lubrifie les convoyeurs pour bouteilles du type à chaîne au moyen de lubrifiants pour convoyeurs à base d'amines grasses primaires neutralisées et que l'on nettoie les convoyeurs à bouteilles au moyen d'agents de nettoyage cationiques ou d'acides organiques.

2. Procédé selon la revendication 1, caractérisé en ce qu'on lubrifie les convoyeurs à bouteilles en continu.

3. Procédé selon la revendication 1 ou 2, caractérisé en ce que l'on nettoie les convoyeurs de façon discontinue.

4. Procédé selon l'une ou plusieurs des revendications 1 à 3 caractérisé en ce que l'on amène l'agent de nettoyage sur les convoyeurs, à l'aide des dispositifs de distribution avec dosage de lubrifiant.

5. Procédé selon l'une ou plusieurs des revendications 1 à 4, caractérisé en ce que l'on utilise un lubrifiant pour convoyeurs contenant de 5 à 20% d'un mélange d'amines grasses primaires neutralisées au moyen d'acide acétique afin d'atteindre un pH de 6 à 8, lesquelles présentent de préférence 12 à 18 atomes de carbone et contiennent une proportion non saturée supérieure à 10%, de 1 à 5% d'alcools gras éthoxylés et/ou d'amines grasses éthoxylées et/ou de nonylphénol éthoxylé avec un degré d'éthoxylation de 5 à 15, de 1 à 5% de triéthanolamine, de 5 à 12% d'isopropanol, le reste étant de l'eau.

6. Procédé selon une plusieurs des revendications 1 à 5, caractérisé en ce que l'on utilise en tant qu'agent de nettoyage cationique des composés d'ammonium quaternaire.

7. Procédé selon la revendication 6, caractérisé en ce que l'on utilise en tant qu'agent de nettoyage un fluide contenant 30 à 45% en poids de composés d'ammonium quater naire, 1 à 5% en poids d'alcools gras éthoxylés et/ou d'amines grasses éthoxylées, et/ou de nonylphénol éthoxylé, avec un degré d'éthoxylation de 5 à 10, 0 à 5% d'isopropanol, le reste étant de l'eau.

8. Procédé selon l'une des revendications de 6 à 7, caractérisé en ce que l'on utilise en tant que composé d'ammonium quaternaire des chlorures d'alkyltriméthylammonium, de dialkyldiméthylammonium et d'alkyldiméthybenzylammonium, avec des restes alkyles, qui présentent 12 à 18 atomes de carbone.

9. Procédé selon la revendication 8, caractérisé en ce que l'on utilise un chlorure d'alkyldiméthylbenzylammonium comportant un groupe alkyle qui présente 12 à 14 atomes de carbone.

10. Procédé selon l'une ou plusieurs des revendications 1 à 9 caractérisé en ce que l'on utilise des mélanges d'amines grasses comportant une proportion non saturée d'au moins 50% en poids.

11. Procédé selon l'une ou plusieurs des revendications 1 à 5, caractérisé en ce que l'on utilise un acide organique qui forme des sels aminés facilement solubles, en particulier l'acide gluconique et/ou l'acide acétique.

12. Procédé selon l'une ou plusieurs des revendications 1 à 5 ou 11, caractérisé en ce que l'on utilise l'acide organique av'ec une concentration d'au moins 0,5% en poids, en particulier de 0,5 à 5% en poids.

13. Procédé selon l'une ou plusieurs des revendications 1 à 12, caractérisé en ce que l'on utilise des lubrifiants pour convoyeurs sous forme aqueuse et une viscosité de 20 à 80 mpas.

**Claims**

1. A method of lubricating chain-type bottle conveyor belts in beverage-bottling plants, particularly in breweries, and also of cleaning the belts by means of a liquid cleaning agent, characterised in that the chain-type bottle conveyor belts are lubricated with belt lubricants based on neutralised primary fatty amines and the bottle conveyor belts are cleaned with cationic cleaning agents or organic acids.

2. A method according to Claim 1, characterised in that the conveyor belts are lubricated continuously.

3. A method according to Claims 1 and 2, characterised in that the conveyor belts are cleaned discontinuously.

4. A method according to one or more of Claims 1 to 3, characterised in that the cleaning agents are applied to the conveyor belts by means of belt lubricant metering devices.

5. A method according to one or more of Claims 1 to 4, characterised in that a belt lubricant is used based on 5 to 20 % of a mixture of primary fatty amines which are neutralised with acetic acid to a pH of 6 to 8, which preferably have 12 to 18 carbon atoms andof which more than 10 % are unsaturated, 1 to 5 % ethoxylated fatty alcohols, and/or ethoxylated fatty amines and/or ethoxylated nonylphenol with a degree of ethoxylation of from 5 to 15, 1 to 5 % triethanol amine, 5 to 12 % isopropanol, the remainder water.

6. A method according to one or more of Claims 1 to 5, characterised in that quaternary ammonium compounds are used as cationic cleaning agents.

7. A method according to Claim 6, characterised in that as cleaning agent an agent is used, which contains 30 to 45 % by weight of quaternary ammonium compounds, 1 to 5 % ethoxylated fatty alcohols and/or ethoxylated fatty amines and/or ethoxylated nonylphenol with a degree of ethoxylation of from 5 to 10, 0 to 5 % by weight of isopropanol, and the remainder water.

8. A method according to either of Claims 6 and 7, characterised in that as quaternary ammonium compounds there are used alkyltrimethyl ammonium, dialkyldimethyl ammonium and alkyldimethyl benxylammmonium chlorides with alkyl radicals having 12 to 18 carbon atoms.

9. A method according to Claim 8, characterised in that an alkyldimethyl benzylammmonium chloride is used having an alkyl group which has 12 to 14 carbon atoms.

10. A method according to one or more of Claims 1 to 9, characterised in that fatty amine mixtures are used of which at least 50 % by weight are unsaturated.

11. A method according to one or more of Claims 1 to 5, characterised in that an organic acid is used which forms readily soluble amine salts, in particular gluconic acid and/or acetic acid.

12. A method according to one or more of Claims 1 to 5 or 11, characterised in that the organic acid is used in a concentration of at least 0.5 % by weight, in particular from 0.5 to 5 % by weight.

13. A method according to one or more of Claims 1 to 12, characterised in that aqueous belt lubricants are used having a viscosity of from 20 to 80 mpa.s.